Europäisches Patentamt

**European Patent Office**

**Office européen des brevets**

(11) Numéro de publication: **0 214 884**
**A1**

## DEMANDE DE BREVET EUROPEEN

(21) Numéro de dépôt: **86401689.4**

(22) Date de dépôt: **29.07.86**

(51) Int. Cl.⁴: **B 60 H 1/22**
**F 24 J 3/00, B 60 H 1/14**

(30) Priorité: **30.07.85 FR 8511597**

(43) Date de publication de la demande:
**18.03.87 Bulletin 87/12**

(84) Etats contractants désignés:
**DE GB IT SE**

(71) Demandeur: **VALEO**
**64 Avenue de la Grande Armée**
**F-75017 Paris(FR)**

(72) Inventeur: **Risbet, Alain**
**5, rue Victor Basch**
**F-95130 Franconville(FR)**

(72) Inventeur: **Herbulot, Jean**
**80, rue du Docteur Roux**
**F-95130 Franconville(FR)**

(72) Inventeur: **Menard, Denis**
**82, rue du 22 Septembre**
**F-92400 Courbevoie(FR)**

(74) Mandataire: **CABINET BONNET-THIRION**
**95 Boulevard Beaumarchais**
**F-75003 Paris(FR)**

(54) Générateur de chaleur pour véhicule automobile.

(57) Générateur de chaleur dérivé d'un coupleur hydro-dynamique.

Selon l'invention, le générateur comprend un élément à aubages (12) mobile en rotation et un élément à aubages (15) bloqué en rotation mais mobile longitudinalement et sollicité par des ressorts (20) vers le premier élément à aubages, le fluide caloporteur étant réchauffé entre les premier et second éléments à aubages.

Chauffage d'appoint dans un véhicule automobile.

EP 0 214 884 A1

"Générateur de chaleur pour véhicule automobile"

L'invention se rapporte à un générateur de chaleur pour véhicule automobile, notamment du type dans lequel la chaleur est produite par des frottements engendrés dans un volume de fluide caloporteur ; l'invention a plus particulièrement pour objet de fournir un chauffage d'appoint à l'habitacle du véhicule et/ou atteindre et entretenir une température de fonctionnement suffisante du moteur, même au ralenti.

On connaît une installation de chauffage d'appoint pour véhicule automobile dans laquelle un liquide confiné entre deux éléments à aubages dont l'un est bloqué en rotation s'échauffe par suite des frottements entretenus entre lesdits éléments à aubages. Une telle installation est par exemple décrite dans le document de brevet français No 2 276 190. Cependant, ce système connu est entraîné par un moteur hydraulique indépendant et intégré à l'installation, ce qui la rend compliquée et coûteuse, et parfois difficile à implanter sur un véhicule. L'invention a pour objet une installation simple, peu volumineuse, et qui ne soit pas assujettie de façon sensible aux variations de vitesse du moteur.

Dans cet esprit, l'invention concerne généralement un générateur de chaleur pour véhicule automobile à moteur, du type comportant une enceinte traversée par un fluide caloporteur et dans laquelle un premier élément à aubages, formant roue, est entraîné en rotation en regard d'un second élément à aubages, disposé dans le prolongement axial dudit premier élément à aubages et bloqué en rotation, pour provoquer un échauffement dudit fluide caloporteur confiné entre lesdits éléments à aubages, caractérisé en ce qu'il comporte des moyens d'évacuation dudit fluide caloporteur de ladite enceinte, en ce que l'un desdits éléments à aubages est monté mobile axialement et en ce que des moyens de rappel élastique sont agencés pour solliciter cet élément à aubages en direction de l'autre élément à aubages. Pour des raisons de simplicité mécanique, l'élément à aubages monté mobile axialement sera de préférence le second élément à aubages bloqué en rotation.

Un générateur de chaleur du type décrit ci-dessus pourra être facilement obtenu en modifiant légèrement un coupleur hydrodynamique, connu en soi, dont l'arbre de sortie est supprimé et remplacé par une projection interne fixe sur laquelle ledit second élément à aubages est adapté à coulisser axialement, les moyens de rappel élastique étant agencés entre une partie fixe de ladite enceinte et ce second élément à aubages.

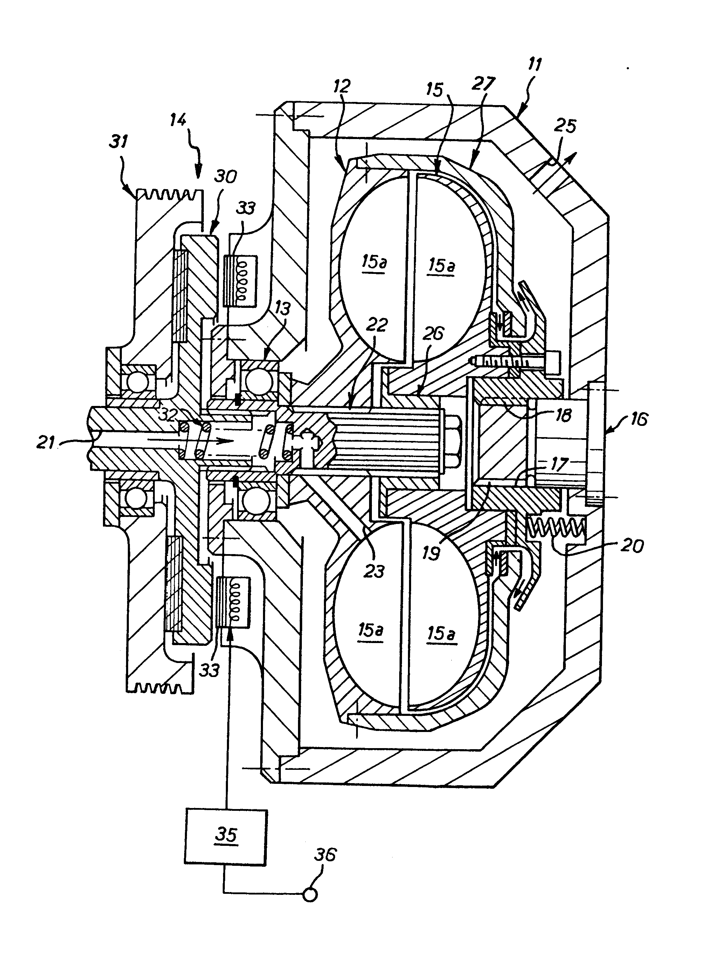

L'invention apparaîtra plus clairement à la lumière de la description qui va suivre d'un mode de réalisation particulier d'un générateur de chaleur conforme à la définition qui précède, donnée uniquement à titre d'exemple et faite en référence au dessin annexé dans lequel :

- la figure unique représente schématiquement un générateur de chaleur selon l'invention, dont la partie mécanique est représentée en coupe longitudinale.

En se reportant au dessin, le générateur de chaleur représenté est dérivé d'un coupleur hydrodynamique connu. Il comporte une enceinte 11 renfermant un premier élément à aubages 12, formant roue, monté en rotation par rapport à l'enceinte 11, au moyen d'un roulement à billes 13 et entraîné en rotation par l'intermédiaire d'un embrayage électromagnétique 14. Un second élément à aubages 15 est logé dans l'enceinte 11 et disposé dans le prolongement axial du premier élément à aubages de façon que les aubages 15a de ces deux éléments soient face à face. Le second élément à aubages 15 est bloqué en rotation. Pour cela, l'arbre de sortie du coupleur a été supprimé et remplacé par une projection interne fixe 16 portant l'élément à aubages 15. Plus précisément, ce dernier comporte un trou axial 17 par lequel il est monté sur la projection interne 16. Des saillies et rainures longitudinales 18,19 sont définies sur les surfaces du trou axial 17 et de la projection 16 et coopèrent pour permettre un coulissement axial du second élément à aubages 15 tout en l'immobilisant en rotation. Des moyens de rappel élastique constitués ici par des ressorts 20 sont interposés entre la paroi interne de l'enceinte 11 et l'élément à aubages 15 pour le solliciter en direction de l'élément à aubages 12. Le fluide caloporteur est introduit entre les aubages par un conduit axial 21 défini dans l'arbre de rotation 22 de l'élément à aubages 12 et auquel se raccordent des éléments de conduit 23 débouchant entre les aubages de l'élément 12. Un orifice 25 pratiqué dans l'enceinte 11 permet l'évacuation du fluide caloporteur chauffé. La circulation du fluide caloporteur entre le conduit 21 et l'orifice 25 peut se faire naturellement grâce à la force d'entraînement imprimée au fluide par la rotation de l'élément à aubages 12. Un palier 26, axial, est interposé entre l'élément à aubages 15 et la portion extrême de l'arbre de rotation 22 de l'élément à aubages 12. Ce dernier porte un carter tournant 27 enveloppant l'élément à aubages 15. Ainsi, le fluide confiné entre les éléments à aubages 12 et 15 s'échappe en s'écoulant entre l'élément 15 et la paroi interne du carter 27 avant de contourner ce dernier et d'être évacué par l'orifice 25. L'embrayage électromagnétique 14 comporte un plateau à friction 30 couplé à l'arbre 22 et mobile longitudinalement par rapport à ce dernier. Le plateau à friction 30 est susceptible de venir en application contre un plateau d'entraînement 31, sous l'action d'un ressort axial 32 lorsque des moyens de commande électromagnétique 33 sont désactivés. L'arbre 22 est immobilisé axialement par rapport à l'enceinte 11, par l'intermédiaire du roulement à billes 13. Le plateau d'entraînement 31 est lui-même entraîné par le moteur (non représenté) du véhicule automobile. Avantageusement, le plateau 31 sera entraîné par l'intermédiaire d'un variateur de vitesse à limitation de plage de vitesses, comme par exemple un variateur de vitesse centrifuge à poulies et courroie, connu en soi et décrit par exemple dans la demande de brevet français No 82 03484. les moyens de commande électromagnétique 33 sont pilotés par l'intermédiaire d'une chaîne de commande thermostatique 35 comprenant par exemple une sonde de température 36 couplée directement ou indirectement au fluide caloporteur qui circule dans l'enceinte 11. L'embrayage 14 est ainsi actionné par intermittence de façon à maintenir la température du fluide caloporteur, ou de l'élément à chauffer, au voisinage d'une valeur choisie, réglable depuis l'habitacle du véhicule. Il est possible d'utiliser différents fluides en tant que fluide caloporteur précité. On pourra par exemple utiliser l'huile de lubrification du moteur en reliant directement le conduit 21 au carter d'huile, avec interposition d'un filtre. Dans ce cas, l'orifice d'évacuation 25 sera relié à un échangeur de chaleur, non représenté. On pourra également utiliser un circuit d'huile indépendant. Le fluide caloporteur pourra aussi être simplement le liquide de refroidissement du moteur, le générateur de chaleur tel que décrit étant alors simplement inséré en série dans ce circuit de liquide de refroidissement. Le fonctionnement du générateur de chaleur qui vient d'être décrit est le suivant.

Lorsque l'élément à aubages 12 est entraîné en rotation à une vitesse donnée, le fluide caloporteur confiné entre les aubages des éléments 12 et 15, s'échauffe par frottement. En même temps, sous l'effet des forces centrifuges engendrées, il est progressivement évacué par le trajet défini ci-dessus tandis que du fluide caloporteur froid est introduit par les conduits 21 et 23. Les forces centrifuges engendrées ont également pour effet de repousser axialement l'élément à aubages 15, contre l'action des ressorts 20. Ainsi, si la vitesse de rotation du moteur augmente, l'écartement entre les deux éléments à aubages a tendance à augmenter et par conséquent les frottements s'exerçant sur le fluide caloporteur ont tendance à diminuer. On obtient ainsi une régulation automatique de la quantité de chaleur produite, quelle que soit la vitesse de rotation du moteur. Cependant, l'interposition du variateur de vitesse mentionné ci-dessus est avantageuse car elle permet d'obtenir une production de chaleur suffisante même aux plus basses vitesses de rotation du moteur.

REVENDICATIONS

1. Générateur de chaleur pour véhicule automobile à moteur, du type comportant une enceinte (11) traversée par un fluide caloporteur et dans laquelle un premier élément à aubages (12), formant roue, est entraîné en rotation en regard d'un second élément à aubages (15), disposé dans le prolongement axial dudit premier élément à aubages et bloqué en rotation, pour provoquer un échauffement dudit fluide caloporteur confiné entre lesdits éléments à aubages, caractérisé en ce qu'il comporte des moyens d'évacuation dudit fluide caloporteur de ladite enceinte, en ce que l'un desdits éléments à aubages (15) est monté mobile axialement et en ce que des moyens de rappel élastique (20) sont agencés pour solliciter cet élément à aubages, en direction de l'autre élément à aubages.

2. Générateur de chaleur selon la revendication 1, caractérisé en ce que l'élément à aubages monté mobile axialement est ledit second élément à aubages (15).

3. Générateur de chaleur selon la revendication 2, caractérisé en ce qu'il est réalisé à partir d'un coupleur hydrodynamique connu en soi, dont l'arbre de sortie est remplacé par une projection interne (16) fixe, en ce que ledit second élément à aubages (15) comporte un trou axial par lequel il est monté sur ladite projection interne et en ce que des rainures et saillies longitudinales sont définies sur les surfaces dudit trou axial et de ladite projection et coopèrent pour permettre le coulissement axial dudit second élément à aubages tout en l'immobilisant en rotation, lesdits moyens de rappel élastique (20) étant interposés entre une partie fixe de ladite enceinte et ledit second élément à aubages.

4. Générateur de chaleur selon l'une des revendications 2 ou 3, caractérisé en ce qu'il comporte des éléments de conduit (22,23) débouchant entre les aubages dudit premier élément à aubages, pour l'introduction dudit fluide caloporteur entre les premier et second éléments à aubages et un orifice (25) d'évacuation dudit fluide caloporteur chauffé, pratiqué dans la paroi de ladite enceinte.

5. Générateur de chaleur selon l'une des revendications précédentes, caractérisé en ce que ledit fluide caloporteur est l'huile de lubrification du moteur et que les moyens d'évacuation précités de ce fluide caloporteur sont reliés à un échangeur de chaleur.

6. Générateur de chaleur selon l'une des revendications 1 à 4, caractérisé en ce que ledit fluide caloporteur est le liquide de refroidissement du moteur.

7. Générateur de chaleur selon l'une des revendications précédentes, caractérisé en ce que ledit premier élément à aubages (12), formant roue, est mécaniquement couplé audit moteur par l'intermédiaire d'un embrayage (14), par exemple un embrayage électromagnétique, piloté par des moyens de commande thermostatique (35,36) thermiquement couplés audit fluide caloporteur.

8. Générateur de chaleur selon l'une des revendications précédentes, caractérisé en ce que ledit premier élément à aubages (12) est entraîné par le moteur avec interposition d'un variateur de vitesse à limitation de plage de vitesses, comme par exemple un variateur de vitesse centrifuge à poulies et courroie, connu en soi.

Office européen
des brevets

**RAPPORT DE RECHERCHE EUROPEENNE**

**0214884**

Numero de la demande

EP  86  40  1689

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int Cl 4) |
|---|---|---|---|
| D,Y | FR-A-2 276 190   (EBERSPACHER)  * En entier * | 1-3,5-8 | B 60 H    1/22 F 24 J    3/00 B 60 H    1/14 |
| Y | GB-A-  452 990   (ILIFFE)  * En entier * | 1-3,5-8 | |
| Y | FR-A-2 500 135   (LOIZEAU) * En entier * | 1-4 | |
| Y | US-A-2 700 538   (ANDERSON) * En entier * | 1-4 | |
| A | DE-C-  646 449   (IRLE) * En entier * | 1 | |
| A | FR-A-2 458 036   (DE COATAUDON) | | |
| D,A | FR-A-2 522 765   (VALEO) | | |

---

DOMAINES TECHNIQUES RECHERCHES (Int Cl 4)

B 60 H
F 24 J
F 16 D
B 66 D

Le présent rapport de recherche a été etabli pour toutes les revendications

| Lieu de la recherche LA HAYE | Date d'achevement de la recherche 26-09-1986 | Examinateur LINTZ C.H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 R2